# EUROPÄISCHE PATENTSCHRIFT

(11) **EP 3 180 120 B1**
(45) Veröffentlichungstag und Bekanntmachung des Hinweises auf die Patenterteilung: **13.03.2019**
(21) Anmeldenummer: 15756853.6
(22) Anmeldetag: 11.08.2015
(51) Int. Cl.: B01J 20/34, C01B 32/36, B01J 20/20, C02F 1/28, C02F 101/36

(54) **VERFAHREN ZUR IN-SITU-REGENERIERUNG VON MIT TRIHALOMETHANEN BELADENEN AKTIVKOHLEN DURCH ALKALISCHE HYDROLYSE**
METHOD FOR IN-SITU REGENERATION OF ACTIVATED CARBON LOADED WITH TRIHALOMETHANES USING ALKALINE HYDROLYSIS
PROCÉDÉ DE RÉGÉNÉRATION IN-SITU DE CHARBONS ACTIFS CHARGÉS DE TRIHALOMÉTHANES PAR HYDROLYSE ALCALINE

(30) Priorität: 11.08.2014 DE 102014111393
(43) Veröffentlichungstag der Anmeldung: 21.06.2017
(73) Patentinhaber: Ovivo Inc., Montreal, QC H3A 2R7 (CA)
(72) Erfinder: KOPINKE, Frank Dieter, 04109 Leipzig (DE); RYCHEN, Philippe, 68640 Muespach-le-Haut (FR)
(74) Vertreter: von Füner, Nicolai
(86) Internationale Anmeldenummer: PCT/EP2015/068417
(87) Internationale Veröffentlichungsnummer: WO 2016/023884

(56) Entgegenhaltungen:
- EP-A1- 2 500 319
- DE-A1- 4 339 887
- DE-A1- 10 223 112
- GB-A- 316 269

## Beschreibung

Die Erfindung betrifft ein Verfahren zur In-situ-Regenerierung von mit Trihalomethanen (THM) beladenen Aktivkohlen. Erfindungsgemäß wird dies durch alkalische Hydrolyse der THM bei erhöhten Temperaturen innerhalb der Aktivkohle in halogenfreie, gut wasserlösliche oder gasförmige Verbindungen erreicht. Nach Abschluss der chemischen Hydrolysebehandlung wird die Aktivkohle durch Spülen mit Wasser und verdünnten Säuren von Reagenzien und Reaktionsprodukten befreit und steht für eine erneute Beladung im Rohwasserstrom zur Verfügung. Während des gesamten Reinigungsvorgangs muss das Aktivkohlebett nicht bewegt werden. Die Erfindung betrifft weiter die Verwendung des erfindungsgemäßen Verfahrens zur Gewinnung von Reinstwasser für deren Anwendung in der Halbleiterindustrie, insbesondere bei der Halbleiterherstellung.

THM entstehen bei der Chlorung von Wässern verschiedener Herkunft - u.a. natürliche Oberflächen- oder Grundwässer, rezyklierte Badwässer etc. - zum Zwecke ihrer Hygienisierung (Keimabtötung). Sie werden durch die sogenannte Haloformreaktion aus gelösten organischen Verbindungen gebildet. Hauptkomponente der THM-Fraktion ist das Chloroform (CHCl₃). THM besitzen kanzerogene Eigenschaften und müssen für die meisten Verwendungszwecke der aufbereiteten Wässer bis auf sehr niedrige Restkonzentrationen (<10 µg/l) entfernt werden. Wegen der weltweiten Verbreitung der Chlorung als Behandlungsstufe von Rohwässern ist die effiziente Entfernung der gebildeten THM ein weltweit relevantes Problem. Die damit kontaminierten Wassermengen liegen in der Größenordnung von >10¹⁰ m³ p.a.

Nach dem Stand der Technik erfolgt die Behandlung der kontaminierten Wässer überwiegend durch Adsorption an Aktivkohlen, wie beispielsweise in EP 2 500 319 A1 oder GB 316 269 A offenbart. Meist wird die Adsorption an granulierten Aktivkohlen (GAC) in Festbett-Anordnung durchgeführt. Nach deren Sättigung muss die GAC ausgetauscht und regeneriert werden. Die Ex-situ-Regenerierung, z.B. durch thermochemische Methoden oder durch Dampfstrippen, ist Stand der Technik, jedoch mit erheblichen Kosten und verfahrenstechnischen Aufwendungen verbunden. Das GAC-Festbett muss aus dem Filterbehälter entleert und in eine spezielle Regenerierungsanlage, meist beim Aktivkohlehersteller, überführt werden. Dabei treten neben zusätzlichen Transportkosten auch GAC-Verluste, z.B. durch Abrieb, auf.

Aus den genannten Gründen kann eine In-situ-Regenerierung ohne mechanische Bewegung des GAC-Festbettes vorteilhaft sein. In der Fachliteratur sind zahlreiche Methoden zur In-situ-Behandlung von GAC beschrieben. Die Mehrzahl beruht auf einer chemischen Oxidation der adsorbierten Schadstoffe, z.B. mit Wasserstoffperoxid-haltigen Lösungen. In einer neueren Arbeit wird die Regenerierung von mit Chloroform beladener GAC (0,04 Ma-%) (Ma-% = Gewichtsprozent, z.B. g Chloroform pro 100g Aktivkohle) durch Oxidation mit Persulfat beschrieben (Huling et al., Persulfate oxidation of MTBE- and chloroform-spent granular activated carbon. J. Hazard. Mat. 2011, 192, 1484-1490). Die anzuwendenden Reaktionsbedingungen sind harsch (3 d bei 55°C und 500 g Persulfat pro kg GAC), die erreichten Ergebnisse unbefriedigend (nur 20-60% Chloroformabbau). Dies ist aus Sicht des Chemikers nicht überraschend, da Chloroform bekanntermaßen zu den schwer oxidierbaren Verbindungen zählt.

Eine Alternative zur Oxidation chlorierter Verbindungen (CKW) kann deren Hydrolyse in wässrigen Medien darstellen. In EP 1 406 840 wird ein mehrstufiges Verfahren zur Dekontamination von Wässern beschrieben, die mit organischen Halogenverbindungen belastet sind. Darin werden in einem ersten Schritt die zu entfernenden CKW (Chlorkohlenwasserstoffe) einer partiellen Dechlorierung in der Wasserphase unterworfen und die entstehenden Reaktionsprodukte in einem zweiten Schritt durch Ausstrippen entfernt. Die partielle Dechlorierung kann u.a. durch alkalische Hydrolyse in homogener wässriger Lösung geschehen.

In einer anderen Ausführungsform wird in DE 102 23 112 A1 ebenfalls die Hydrolyse von CKW als erster Teilschritt in einer Kette von Behandlungsschritten beschrieben. Dabei werden schwer flüchtige CKW durch partielle Dechlorierung in leichter flüchtige CKW umgewandelt und diese dann durch Strippen aus der Wasserphase entfernt. Beispiele dafür sind die Umwandlung von 1,1,2,2-Tetrachlorethan in Trichlorethen und die Umwandlung von Hexachlorcyclohexan in Trichlorbenzole (Mackenzie et a. Catalytic effects of activated carbon on hydrolysis reactions of chlorinated organic compounds. Part 1: γ-Hexachlorocyclohexane. Cat. Today 2005, 102-103C, 148-153 und Part 2: 1,1,2,2-Tetrachloroethane. Appl. Cat. B Environm. 2005, 59, 171-179.). Dabei wurde gefunden, dass die untersuchten CKW an Aktivkohlen schneller hydrolysieren, als bei gleichem pH-Wert in homogener wässriger Lösung.

Den ausgeführten Beispielen sind drei Merkmale gemeinsam:
a) Trotz Anwendung von z.T. drastischen Reaktionsbedingungen gelingt durch Hydrolyse nur eine partielle Dechlorierung. Es werden chlorhaltige, ebenfalls toxische Reaktionsprodukte erhalten, deren Entfernung aus der Wasserphase mindestens einen weiteren Verfahrensschritt erfordert.
b) Das Ausstrippen der neu gebildeten CKW ist immanenter Bestandteil der Verfahrenskette. Die verwendeten Aktivkohlen werden ***nicht*** regeneriert, sondern nur als Reaktorfüllung gebraucht.
c) Die behandelten Aktivkohlen waren stets mit hohen Gehalten (1 bis 20 Gewichtsprozent) an CKW beladen. Über die Zugänglichkeit und Reaktivität sehr geringer Restbeladungen, wie sie im hier beschriebenen, erfindungsgemäßen Verfahren zu eliminieren sind, wird nichts ausgesagt.

Chloroform wird in keinem der aufgeführten Beispiele als Substrat beschrieben. Zunächst wurde in eigenen Voruntersuchungen die Hydrolyse von Chloroform als Sorbat an kommerzieller GAC untersucht (vgl. Ausführungsbeispiel 1). Dabei wurde gefunden, dass für Chloroform unter den in der Literatur beschriebenen Reaktionsbedingungen (pH = 12 bis 14, Umgebungstemperatur, Reaktionszeiten bis zu 1 Woche) keine signifikanten Abbaugrade erzielt werden können.

Aus Sicht des Chemikers folgen alle aufgeführten Beispiele für die Hydrolyse von CKW einem einheitlichen Reaktionsmechanismus - der ß-Eliminierung von Chlorwasserstoff (HCl) aus einem CKW-Molekül. Diese Reaktion kann nur dann ablaufen, wenn das CKW-Molekül mindestens je ein Cl-Atom und ein H-Atom an benachbarten C-Atomen in trans-Stellung aufweist. Da Chloroform nur ein C-Atom enthält, ist diese Voraussetzung nicht gegeben und das Molekül muss als schwer hydrolysierbar angesehen werden. Hinzu kommt offenbar ein sehr effizienter Schutz des Chloroforms im sorbierten Zustand gegen einen hydrolytischen Abbau. All dies sind ungünstige Voraussetzungen für eine Regenerierung von niedrig beladenen Aktivkohlen durch diesen Reaktionstyp.

Neben einer geeigneten chemischen Umwandlung der THM in unbedenkliche Produkte ist für die Regenerierung eines GAC-Filters dessen Freispülung von den Reaktionsprodukten und Reagenzien eine notwendige Voraussetzung. Je nach Art der Wasseraufbereitung, z.B. für die Erzeugung von Trinkwasser oder von Reinstwasser für chemische Prozesse, können die Anforderungen an die Qualität des GAC-Eluates nach einer Regenerierung sehr hoch sein, ausgedrückt durch Parameter wie pH-Wert oder Salzgehalt. Gleichzeitig soll die Menge an verbrauchtem und zu entsorgendem Spülwasser begrenzt werden. Bereits diese beiden Anforderungen stehen in einem Spannungsfeld. Hinzu kommen die bekannten Eigenschaften von GAC, den Stofftransport durch langsame Intrapartikeldiffusion und Pufferkapazitäten zu verzögern. Chemische Regenerierung und Freispülung führen zur Nichtverfügbarkeit der Filteranlage für den regulären Betrieb. Diesen Zeitraum gilt es zu minimieren.

Insgesamt stellt die Optimierung des Freispülprozesses eine beträchtliche wirtschaftliche und verfahrenstechnische Herausforderung für das gesamte In-situ-Regenerierungsverfahren dar. Nur wenn es gelingt, beide Schritte - die chemische Schadstoffeliminierung und die Freispülung des GAC-Festbettes - mit einem vetretbaren stofflichen und zeitlichen Aufwand zu erreichen, kann die In-situ-Regenerierung wirtschaftlich mit einer Off-site-Regenerierung nach dem Stand der Technik erfolgreich konkurrieren.

Das nachfolgend beschriebene Verfahren muss demnach drei Aufgaben lösen:
a) die chemische Umwandlung von THM, insbesondere Chloroform in toxikologisch unbedenkliche, möglichst halogenfreie Produkte, die zudem von der GAC nur wenig retardiert werden,
b) die Freispülung der regenerierten GAC von allen Reaktionsprodukten und Reagenzien mit einem möglichst geringen Wasserverbrauch und in einem angemessenen Zeitrahmen und
c) die verwendeten Chemikalien und Reagenzien sollten möglichst kostengünstig und umweltfreundlich sein.

Diese Aufgaben werden erfindungsgemäß durch ein Verfahren gemäß Anspruch 1 gelöst.

Vorteilhafte Weiterentwicklungen des erfindungsgemäßen Verfahrens sind in den Unteransprüchen 2 bis 11 beschrieben.

Es handelt sich bei dem erfindungsgemäßen Verfahren um die heterogene Hydrolyse der THM im alkalischen Milieu bei erhöhten Temperaturen direkt im adsorbierten Zustand und einen mehrstufigen Waschprozess des GAC-Bettes. Gemäß der allgemeinen Bruttoreaktionsgleichung

**CHX₃** + 4 ZOH → **HCOO⁻** + **3X⁻** + 4 Z⁺ + 2 H₂O (+CO + CO₂)

wobei X = Cl, Br, Fl oder I und Z = Na oder K ist,
oder als spezifisches Beispiel mit Chloroform und Natronlauge

**CHCl₃** + 4 NaOH → **HCOO⁻** + 3 **Cl⁻** + 4 Na⁺ + 2 H₂O (+ CO + CO₂)

bzw. in der allgemeinen Form

**CHXₙ** Y₍₃₋ₙ₎ + ZOH → **HCOO⁻** + **nX⁻**+ (3-n) Y + 4 Z^{+ -}+ 2 H₂O (+CO + CO₂)

wobei X und Y = Cl, Br, Fl oder I, Z = Na oder K und n = 1 oder 2 ist, oder als spezifisches Beispiel mit Dibromchlormethan und Natronlauge

**CHClBr₂** + 4 NaOH → **HCOO⁻** + **Cl⁻** + 2 **Br⁻** + 4 Na⁺ + 2 H₂O (+ CO + CO₂)

werden als Reaktionsprodukte Ameisensäure, Kohlenoxide (in geringen Mengen) und, in den spezifischen Beispielen Chlorid bzw. Bromid gebildet, die sämtlich nicht signifikant an Aktivkohlen adsorbieren und mit dem Freispülen vollständig entfernt werden können. Natronlauge wird in den spezifischen Beispielen in Natriumchlorid bzw. -bromid umgewandelt. Es werden ausschließlich kostengünstige, nicht wassergefährdende Chemikalien verwendet. Es ist keine weitere Behandlungsstufe, wie z.B. das Ausstrippen von Reaktionsprodukten, erforderlich. Erfindungsgemäß handelt es sich um ein Verfahren zur In-situ-Regenerierung von mit Trihalomethanen beladenen Aktivkohlen, dadurch gekennzeichnet, dass die beladene Aktivkohle im ruhenden Festbett bei einer Reaktionstemperatur im Bereich von 40 bis 80°C mit wässriger Lauge in Kontakt gebracht und durch eine Abfolge von Spülschritten mit Wasser und/oder verdünnten Säuren freigewaschen wird.
Bei den Trihalomethanen handelt es sich bevorzugt um Chloroform, Fluoroform, Bromoform, lodoform, Bromdichlormethan oder Dibromchlormethan, besonders bevorzugt um Chloroform.
Bevorzugt weist die wässrige Lauge einen pH-Wert von 13 bis 14 auf.
Bevorzugt wird als Lauge Natronlauge oder Kalilauge mit einer Konzentration von 0,1 bis 10 molar, bevorzugt 0,5 bis 2 molar verwendet.
Bevorzugt ist die Reaktionstemperatur im ruhenden Festbett im Bereich von 40 bis 80°C, besonders bevorzugt von 50 bis 70°C eingestellt.

Bevorzugt beträgt die Behandlungsdauer des Festbettes mit Lauge im Bereich von 2 Stunden bis 3 Tagen, bevorzugt 12 bis 26 Stunden. Dabei kann die Behandlungsdauer in Abhängigkeit von den Parametern Laugekonzentration, Reaktionstemperatur und gefordertem THM-Eliminierungsgrad optimiert werden.

Bevorzugt wird die Lauge im Kreislauf durch das Festbett gepumpt und in dem Laugekreislauf ein Wärmetauscher zum Aufheizen und Abkühlen des Festbettes integriert.

Bevorzugt wird nach Ende der Laugebehandlung das Festbett mit einer Abfolge von Spülschritten mit Wasser und/oder verdünnten Säuren freigespült.

Bevorzugt wird nach Abschluss der Laugebehandlung das Festbett zunächst mit einem oder mehreren Bettvolumina an Wasser gespült. Die dabei erhaltene Lauge hoher Konzentration wird für weitere Behandlungsschritte konserviert und das Festbett mit einer Abfolge von Spülschritten mit verdünnten Säuren und/oder Wasser freigespült.

Bevorzugt besteht die Abfolge der Spülschritte aus ein bis fünf, vorzugsweise nur einem Spülschritt mit je einem oder mehreren Bettvolumina an verdünnten Säuren, vorzugsweise 0,05 bis 0,5 molarer Salzsäure oder Schwefelsäure, gefolgt von weiteren 5 bis 100, vorzugsweise 10 bis 30 Spülschritten mit je einem oder mehreren Bettvolumina an reinem Wasser.

Bevorzugt wird in den Spülschritten eine Kontaktzeit zwischen Spülmedium und Feststoff von je 10 min bis 2 h, bevorzugt 15 bis 30 min, eingehalten. Dabei kann die Kontaktzeit durch Variation der Pumprate oder durch Einstellen einer Ruhephase zwischen den Pumpphasen eingestellt werden.

Das erfindungsgemäße Verfahren zur In-situ-Regenerierung von mit Trihalomethanen beladenen Aktivkohlen wird in einer Ausführungsform zur Herstellung von Reinstwasser verwendet. Bei Reinstwasser handelt es sich um Wasser, das so gut wie keine Fremdstoffe enthält. Gemäß einer Definition für Hochgereinigtes Wasser (*Aqua valde purificata*), wie es insbesondere in der pharmazeutischen Industrie Verwendung findet, werden an dieses Wasser folgende Anforderungen gestellt:
- Leitfähigkeit ≤ 1,1 µS/cm bei 20 °C
- Bakterielle Endotoxine < 0,25 IE/ml (entspricht rund 25 ng/l)
- Gesamter organischer Kohlenstoff (TOC) ≤ 0,5 mg/l
- Nitrat ≤ 0,2 mg/l.

Bevorzugt findet das durch das erfindungsgemäße Verfahren gewonnene Reinstwasser Anwendung in der Halbleiterindustrie, insbesondere bei der Herstellung von Halbleitern.

In der Halbleiterindustrie muss das Reinstwasser noch strengeren Anforderungen genügen. Hier wird die Leitfähigkeit bei < 0.055 µS/cm definiert, bzw. < 18.2 MOhm/cm spezifischer Widerstand.

Obwohl Chloroform nur schwer hydrolysierbar ist und im Porenraum der GAC fest sorbiert vorliegt, gelingt seine Hydrolyse durch Anwendung von drastischen Reaktionsbedingungen. Laborexperimente in Gegenwart und in Abwesenheit von Aktivkohlen haben überraschend ergeben, dass die heterogene Hydrolyse von Chloroform um zwei bis drei Größenordnungen langsamer verläuft als die homogene Reaktion. Dieser Befund steht im Gegensatz zu den in DE 102 23 112 A1 beschriebenen katalytischen Effekten, wonach Aktivkohlen die Hydrolyse von bestimmten CKW beschleunigen. Um dennoch hohe Chloroform-Umsetzungsgrade zu erreichen, können drei Verfahrensparameter variiert werden: der pH-Wert der Regenerierungslösung, die Temperatur und die Reaktionszeit. In den Ausführungsbeispielen sind mehrere optimierte Parameterkombinationen beschrieben.

Wesentlich ist der Befund, dass mäßig erhöhte Reaktionstemperaturen von ≤80°C, bevorzugt ≤ 70°C, für eine nahezu vollständige Hydrolyse des Chloroforms innerhalb von 36 h ausreichen. Diese Temperaturen sind in gewöhnlichen GAC-Filtereinheiten problemlos einstellbar und können durch Nutzung von kostengünstiger Abfallwärme erzeugt werden.

Wesentlich für den Erfolg des erfindungsgemäßen Verfahrens ist die Erhaltung der Struktur, der inneren Oberfläche und Sorptionseigenschaften der GAC trotz der anzuwendenen, drastischen Reaktionsbedingungen (vgl. Ausführungsbeispiel 5).

Experimente im Labormaßstab zeigen, dass unter optimierten Reaktionsbedingungen selbst extrem geringe THM-Beladungen im Bereich um 0,01 Gewichtsprozent eliminiert werden können (vgl. Ausführungsbeispiel 2). Diese überraschende Fähigkeit ist insofern wichtig, weil die THM-Konzentrationen in den zu reinigenden Wässern sehr niedrig liegen können, z.B. im Bereich von wenigen µg/l, woraus eine extrem geringe Aktivkohlebeladung resultiert. Die Größenordnung der zu erwartenden Beladungen ergibt sich unter Annahme einer Chloroform-Eingangskonzentration von 50 µg/l aus folgender Überschlagsrechnung: q_{AK} = K_{d} x C_{Chloroform im Wasser} = 10⁴ l/kg x 50 µg/l = 10⁻⁴ kg/kg = 0,05%, mit K_{d} als Sorptionskoeffizient von Chloroform aus Wasser an Aktivkohle.

Die erfindungsgemäße Regenerierung wird auch durch Koadsorbate, wie z.B. makromolekulare organische Verbindungen (Huminstoffe), wie sie typischerweise in Rohwässern enthalten sind, und auf den Aktivkohlefiltern ebenfalls adsorbieren, nicht beeinträchtigt (vgl. Ausführungsbeispiel 3).

Diese herausragende Fähigkeit der erfindungsgemäßen hydrolytischen Behandlung, auch kleinste Schadstoffanteile vollständig zu zerstören, ergibt sich aus mehreren Faktoren:
a) einem großen Überschuss an kostengünstigem Hydrolysereagenz (z.B. Natronlauge),
b) der Zugänglichkeit des sorbierten Schadstoffs für 'kleine' Hydroxidionen selbst auf bevorzugten Sorptionsplätzen in den Mikro- und Nanoporen der Aktivkohle,
c) dem Fehlen einer Konkurrenzreaktion, die das Regenerierungsreagenz parasitär verbrauchen kann (wie z.B. die Aktivkohle selbst bei oxidativen Verfahren) und
d) der Robustheit der chemischen Umsetzung selbst. Die Hydrolysereaktion benötigt keinen Katalysator, der durch andere Wasserinhaltsstoffe oder Koadsorbate vergiftet werden könnte.

Die Freispülung des GAC-Bettes nach Abschluss der chemischen Hydrolysebehandlung wird durch eine optimierte Abfolge von Spülschritten ausgeführt. Dabei kann sowohl ein Ablaufen der Natronlauge aus dem GAC-Festbett nach unten als auch eine Verdrängung der Natronlauge durch Frischwasser (in beide Richtungen) angewendet werden, ohne dass das Filterbett dabei trocken fällt.

Die noch hoch konzentrierte Natronlauge aus der ersten Spülstufe, ggf. auch aus den ersten Spülstufen, kann problemlos für weitere Hydrolysebehandlungen eingesetzt werden. Bei Bedarf wird der gewünschte pH-Wert der rezyklierten Natronlauge vor ihrer erneuten Verwendung durch Zumischen von frischer, hoch konzentrierter Natronlauge (z.B. 40%-ig) oder von festem Natriumhydroxid in Schuppenform eingestellt.

Der Waschprozess kann nun kontinuierlich oder stufenweise oder semikontinuierlich durch periodisches Umpumpen des Spülwassers im Kreislauf fortgeführt werden. Wichtig ist, dass eine Kontaktzeit der Waschwässer von mindestens 10 min bis 2 h, bevorzugt bis 30 min im kontinuierlichen Betrieb bzw. eine Equilibrierungszeit zwischen Spülwasser (Spülmedium) und Festbett (Feststoff) im stufenweisen Betrieb von mindestens 10 bis 30 min (in Abhängigkeit von GAC-Korngröße und Porengrößenverteilung) eingehalten wird. Eine schnellere Spülung verschlechtert deren Effizienz, d.h. der Wasserverbrauch für das gleiche Spülergebnis wird erhöht.

Das Ergebnis der Spülung kann über den pH-Wert des Eluates oder desssen elektrische Leitfähigkeit verfolgt werden. Spülexperimete an GAC-Säulen im Labormaßstab haben gezeigt, dass die Effizienz der Freispülung anfangs hoch ist, d.h. dem aus Spülwasservolumen und Porenvolumen berechneten Verlauf annähernd folgt, jedoch mit fortschreitender Ausspülung immer geringer wird.

Diesen ungünstigen Verlauf kann man signifikant verbessern, wenn ab einem bestimmten pH-Wert im Eluat Frischwasser kurzzeitig durch verdünnte Säuren, z.B. Salzsäure (HCl), ersetzt wird. Dabei wird die in der Aktivkohle gespeicherte und nur langsam auswaschbare Alkalität (= Pufferkapazität) neutralisiert. Die bei der Neutralisation gebildeten Salze (z.B. NaCl) sind leichter auswaschbar als die gespeicherte Natronlauge. Dabei kann auch eine vorübergehende 'Übersäuerung' des Eluates auftreten und problemlos in Kauf genommen werden (vgl. Ausführungsbeispiel 7). Auf diese Weise können mit 20 bis 30 Bettvolumina an Spülwasser Ablaufwerte (pH-Wert ca. 8, Leitfähigkeit < 0,1 mS/cm) erreicht werden, die eine problemlose Wiederinbetriebnahme der regenerierten GAC-Filter gestatten.

### Ausführungsbeispiele

Die Ausführungsbeispiele basieren auf Experimenten im Labormaßstab. Dabei wurde eine kommerzielle GAC (Partikelfraktion: 1 bis 3 mm, spezifische Oberfläche nach BET-Methode: 1150 m²/g) aus wässriger Lösung mit ca. 0,05 Gewichtsprozent Chloroform (oder Bromoform) beladen und für mindestens eine Woche equilibriert. Danach wurden 10 g Aliquote der Aktivkohle in thermostatierbare Säulen gefüllt und unterschiedlichen Behandlungen unterworfen. Nach vorgegebenen Behadlungszeiten wurden Wasserproben entnommen und deren Chloridgehalte bestimmt. Am Ende einer Behandlungsperiode wurde die GAC-Säule entweder
a) erschöpfend mit Toluol als Extraktionsmittel extrahiert und der Extrakt gaschromatographisch auf vorhandene CKW analysiert oder
b) die Freispülung der Säule durch eine Folge von Spülschritten ausgeführt. Dabei wurden der pH-Wert und die elektrische Leitfähigkeit der Säuleneluate gemessen.

### Beispiel 1:

Eine wie oben präparierte GAC-Säule wurde mit 20 ml 1 M Natronlauge (pH = 14) gefüllt und bei Umgebungstemperatur (20 ± 2°C) für 7 Tage belassen. Danach wurde die Natronlauge abgezogen und ihr Chloridgehalt bestimmt. Er betrug 1,5 mg/l. Dieser Wert entspricht einem Chloroform-Umsatz von ca. 0,7%. Das Beispiel zeigt, dass an GAC sorbiertes Chloroform bei Umgebungstemperatur nur extrem langsam hydrolysiert.

### Beispiel 2:

5 mit Chloroform beladene GAC-Säulen wurden in Parallelversuchen den folgenden Behandlungsbedingungen ausgesetzt (siehe Tabelle 1):

**Tabelle 1:**

| | t [h] | pH-Wert | T [°C] | Chloroformumsatz [%] aus Chloridbilanz |
|---|---|---|---|---|
| Säule 1 | 72 | 14 | 50 | 42 |
| Säule 2 | 48 | 14,3 | 60 | 91 |
| Säule 3 | 36 | 14,3 | 70 | 99 |
| Säule 4 ¹⁾ | 16 | 13,7 | 80 | 82 |
| Säule 5 ²⁾ | 24 | 14 | 70 | 83 |

| | | | | |
|---|---|---|---|---|
| ¹⁾ KOH statt NaOH ²⁾ Anfangsbeladung der GAC 0,01 statt 0,05 Gewichtsprozent | | | | |

Unter geeigneten Reaktionsbedingungen konnten innerhalb von 1 bis 2 d Behandlungszeit hohe Chloroform-Umsetzungsgrade (>90%) erzielt werden.

Zur Bestätigung der aus der Chloridbilanz errechneten Chloroform-Umsätze wurde die GAC-Füllung aus Säule 3 einer erschöpfenden Lösungsmittelextraktion unterworfen. Die GC-Analyse des Extraktes zeigte einen Rest-Chloroformgehalt der GAC von ca. 2 µg/g, entsprechend einem Eliminierungsgrad von 99,6% an. Diese Werte bestätigen auch, dass die Hydrolyse des Chloroforms zur vollständigen Chloridfreisetzung führt und keine chlorierten Nebenprodukte gebildet werden.

Die Daten aus Säule 5 zeigen, dass auch sehr niedrige Beladungen mit der Methode eliminierbar sind.

### Beispiel 3:

Bei der Beladung der GAC mit 0,05 Gewichtsprozent Chloroform wurde zusätzlich eine kommerzielle Huminsäure (Fa. Aldrich) mit einer Konzentration von 5 mg/l zudosiert. Diese diente als Ersatz für natürliches organisches Material (NOM) in Rohwässern. Rund die Hälfte dieser Huminsäure wurde von der GAC simultan zum Chloroform adsorbiert und lieferte eine zusätzliche Beladung von ca. 0,5 Gewichtsprozent. Diese zusätzliche Beladung war 10 mal höher als die Chloroformbeladung. Eine mit dieser kobeladenen GAC gefüllte Säule wurde der Hydrolyse analog zu Beispiel 2, Säule 3 unterworfen. Es wurden >97% Chloridausbeute in der Natronlauge und 4 µg unumgesetztes Chloroform pro g GAC im Toluolextrakt gemessen, entsprechend einem Chloroformrest von 0,8%.

Das Beispiel zeigt, dass auch höhere Beladungen mit Kosorbaten wie Huminstoffe die Hydrolyse des Chloroforms an GAC nicht entscheidend inhibieren.

### Beispiel 4:

Die GAC wurde mit 0,1 Gewichtsprozent Bromoform (CHBr₃) an Stelle von Chloroform beladen und der Hydrolyse gemäß Beispiel 2, Säule 3 unterworfen. Die Bromidbestimmung in der Natronlauge lieferte eine Wiederfindung >95%. Die Lösungsmittelextraktion ergab keinerlei unumgesetztes Bromoform im Extrakt.

### Beispiel 5:

GAC wurde vor und nach einer hydrolytischen Behandlung gemäß Beispiel 2, Säule 3 durch Messung der inneren Oberfläche mit der BET-Methode und durch mikroskopische Vermessung der mittleren Partikelgröße charakterisiert. Die BET-Oberfläche blieb innerhalb der Messgenauigkeit der Methode (± 10%) unverändert bei 1000 bis 1200 m²/g. Partikelgrößenverteilung und mechanische Stabilität (Abriebfestigkeit) zeigten ebenfalls keine signifikanten Veränderungen. Die Chloroformadsorption beider GAC-Proben war ebenfalls gleich (Sorptionskoeffizient K_{d} ≈ 2 x 10⁴ l/kg bei C_{Chloroform} ≈ 50 µg/l).

### Beispiel 6:

Eine gemäß Beispiel 1 mit 1 M Natronlauge equilibrierte GAC-Säule wurde mit insgesamt 50 Bettvolumina an entionisiertem Wasser (VE-Wasser) im Intervallregime gewaschen. Dabei betrug die Equilibrierungszeit zwischen zwei Waschschritten für jedes Bettvolumen 15 min. Das letzte Ablaufwasser dieser Freispülung wies einen pH-Wert von 11,2 und eine Leitfähigkeit von 350 µS/cm auf. Diese Werte entsprechen einer NaOH-Restkonzentration von ca. 1,6 mM oder einer Abreicherung der Ausgangskonzentration um den Faktor 625. Für den Fall einer 'idealen', nicht-retardierten Wäsche der GAC-Säule (mit ungünstiger vollständiger Rückvermischung) errechnet sich ein Abreicherungsfaktor von 2⁵⁰ ≈ 10¹⁵. Die praktisch sehr viel weniger effiziente Freispülung ist im wesentlichen auf die Säure-Base-Puffereigenschaften der Aktivkohle zurückzuführen.

Das Beispiel zeigt, dass die Neutralspülung eines vorher alkalisch equilibrierten GAC-Festbettes mit reinem Wasser nur mit hohem Aufwand erreichbar ist.

### Beispiel 7:

Es wurde analog zu Beispiel 6 verfahren, jedoch mit dem Unterschied, dass nach zwei Bettvolumina an reinem Spülwasser mit zwei weiteren Bettvolumina an 0,05 M Salzsäure gewaschen wurde. Das erste Eluat nach den zwei Säurespülungen wies einen pH-Wert von 3 auf. Danach wurde mit weiteren 29 Bettvolumina an VE-Wasser in 15 min-Intervallen gewaschen. Das letzte Ablaufwasser dieser Freispülung wies einen pH-Wert von 6,0 ± 0,3 und eine Leitfähigkeit von 110 µS/cm auf. Diese Werte entsprechen einem neutralen Eluat mit einer NaCl-Restkonzentration von ca. 0,9 mM. Daraus errechnet sich ein Reduktionsfaktor in der Leitfähigkeit des letzten Eluates gegenüber dem Ausgangszustand (1 M NaOH) von rund 2000. Dieses Ergebnis wurde mit 34 Bettvolumina Spülwasser im Vergleich zu 50 Bettvolumina in Beispiel 6 erreicht.

Das Beispiel zeigt, dass eine Säurespülung im Freispülprozess das Ergebnis signifikant verbessern kann. Der Waschprozess ist immer noch durch die Puffereigenschaften der Aktivkohle verzögert, jedoch ist die Retardierung von NaCl deutlich weniger ausgeprägt als jene von NaOH.

## Patentansprüche

1. Verfahren zur In-situ-Regenerierung von mit Trihalomethanen beladenen Aktivkohlen, **dadurch gekennzeichnet, dass**
die beladene Aktivkohle im ruhenden Festbett bei einer Reaktionstemperatur im Bereich von 40 bis 80°C mit wässriger Lauge in Kontakt gebracht und durch eine Abfolge von Spülschritten mit Wasser und/oder verdünnten Säuren freigewaschen wird.

2. Verfahren nach Anspruch 1, **dadurch gekennzeichnet, dass**
es sich bei den Trihalomethanen um Chloroform, Fluoroform, Bromoform, Iodoform, Bromdichlormethan oder Dibromchlormethan, bevorzugt um Chloroform handelt.

3. Verfahren nach Anspruch 1 oder 2, **dadurch gekennzeichnet, dass**
die wässrige Lauge einen pH-Wert von 13 bis 14 aufweist.

4. Verfahren nach Anspruch 1 bis 3, **dadurch gekennzeichnet, dass**
als Lauge Natronlauge oder Kalilauge mit einer Konzentration von 0,1 bis 10 molar, bevorzugt 0,5 bis 2 molar, verwendet wird.

5. Verfahren nach einem der vorangegangenen Ansprüche, **dadurch gekennzeichnet, dass**
die Reaktionstemperatur im ruhenden Festbett im Bereich von 50 bis 70°C eingestellt wird.

6. Verfahren nach einem der vorangegangenen Ansprüche, **dadurch gekennzeichnet, dass**
die Behandlungsdauer des Festbettes mit Lauge im Bereich von 2 Stunden bis 3 Tagen, bevorzugt 12 bis 26 Stunden beträgt.

7. Verfahren nach einem der vorangegangenen Ansprüche, **dadurch gekennzeichnet, dass**
die Lauge im Kreislauf durch das Festbett gepumpt wird und in dem Laugekreislauf ein Wärmetauscher zum Aufheizen und Abkühlen des Festbettes integriert ist.

8. Verfahren nach einem der vorangegangenen Ansprüche, **dadurch gekennzeichnet, dass**
nach Ende der Laugebehandlung das Festbett mit einer Abfolge von Spülschritten mit Wasser und/oder verdünnten Säuren freigespült wird.

9. Verfahren nach Anspruch 8, **dadurch gekennzeichnet, dass**
nach Abschluss der Laugebehandlung das Festbett zunächst mit einem oder mehreren Bettvolumina an Wasser gespült und das Festbett mit einer Abfolge von Spülschritten mit verdünnten Säuren und/oder Wasser freigespült wird.

10. Verfahren nach Anspruch 9, **dadurch gekennzeichnet, dass**
die Abfolge der Spülschritte aus ein bis fünf, vorzugsweise nur einem Spülschritt mit je einem oder mehreren Bettvolumina an verdünnten Säuren, vorzugsweise 0,05 bis 0,5 molarer Salzsäure oder Schwefelsäure, gefolgt von weiteren 5 bis 100, vorzugsweise 10 bis 30 Spülschritten mit je einem oder mehreren Bettvolumina an reinem Wasser besteht.

11. Verfahren nach den Ansprüchen 8 bis 10, **dadurch gekennzeichnet, dass**
in den Spülschritten eine Kontaktzeit zwischen Spülmedium und Feststoff von je 10 min bis 2 h, bevorzugt 15 bis 30 min, eingehalten wird, wobei die Kontaktzeit durch Variation der Pumprate oder durch Einstellen einer Ruhephase zwischen den Pumpphasen eingestellt werden kann.

12. Verfahren zur Herstellung von Reinstwasser umfassend das Verfahren nach einem der Ansprüche 1 bis 11.

13. Verfahren nach Anspruch 12 zur Gewinnung von Reinstwasser für die Halbleiterindustrie.

## Claims

1. Method for in-situ regeneration of activated carbon loaded with trihalomethanes, **characterised in that** the loaded activated carbon in the static fixed bed is brought into contact with aqueous alkaline solution at a reaction temperature in the range of from 40 to 80°C and is rinsed by means of a sequence of rinsing steps using water and/or diluted acids.

2. Method according to claim 1, **characterised in that** the trihalomethanes are chloroform, fluoroform, bromoform, iodoform, bromodichloromethane or dibromochloromethane, preferably chloroform.

3. Method according to either claim 1 or claim 2, **characterised in that** the aqueous alkaline solution has a pH of from 13 to 14.

4. Method according to claims 1 to 3, **characterised in that** sodium hydroxide solution or potassium hydroxide solution having a concentration of from 0.1 to 10 molar, preferably 0.5 to 2 molar, is used as the alkaline solution.

5. Method according to any of the preceding claims, **characterised in that** the reaction temperature in the static fixed bed is set in the range of from 50 to 70°C.

6. Method according to any of the preceding claims, **characterised in that** the duration for treating the fixed bed with alkaline solution is in the range of from 2 hours to 3 days, preferably 12 to 26 hours.

7. Method according to any of the preceding claims, **characterised in that** the alkaline solution is circulated through the fixed bed by pumping and a heat exchanger for heating and cooling the fixed bed is integrated into the alkaline circuit.

8. Method according to any of the preceding claims, **characterised in that** after the end of the alkaline treatment, the fixed bed is rinsed by means of a sequence of rinsing steps using water and/or diluted acids.

9. Method according to claim 8, **characterised in that** after the alkaline treatment has finished, the fixed bed is first rinsed using one or more bed volumes of water and the fixed bed is rinsed by means of a sequence of rinsing steps using diluted acids and/or water.

10. Method according to claim 9, **characterised in that** the sequence of rinsing steps consists of one to five, preferably just one rinsing step each using one or more bed volumes of diluted acids, preferably 0.05 to 0.5 molar hydrochloric acid or sulfuric acid, followed by a further 5 to 100, preferably 10 to 30 rinsing steps each using one or more bed volumes of pure water.

11. Method according to claims 8 to 10, **characterised in that** a contact time between the rinsing medium and solid matter of from 10 min to 2 h, preferably 15 to 30 min, is maintained in each of the rinsing steps, it being possible to set the contact time by varying the pump rate or by setting a rest phase between the pump phases.

12. Method for producing ultrapure water comprising the method according to any of claims 1 to 11.

13. Method according to claim 12 for obtaining ultrapure water for the semiconductor industry.

## Revendications

1. Procédé pour la régénération in situ de charbons actifs chargés avec des trihalogénométhanes, **caractérisé en ce que** le charbon actif chargé est mis en contact dans un lit fixe au repos à une température réactionnelle dans la plage de 40 à 80 °C avec une lessive alcaline aqueuse et, via une succession d'étapes de rinçage avec de l'eau et/ou avec des acides dilués, est purifié par lavage.

2. Procédé selon la revendication 1, **caractérisé en ce que**, en ce qui concerne les trihalogénométhanes, il s'agit du chloroforme, du fluoroforme, du bromoforme, de l'iodoforme, du bromodichlorométhane ou du dibromochlorométhane, de préférence du chloroforme.

3. Procédé selon la revendication 1 ou 2, **caractérisé en ce que** la lessive alcaline aqueuse présente une valeur de pH de 13 à 14.

4. Procédé selon l'une quelconque des revendications 1 à 3, **caractérisé en ce qu'**on utilise, à titre de lessive alcaline, une lessive sodique ou une lessive de potasse possédant une concentration de 0,1 à 10 molaires, de préférence de 0,5 à 2 molaires.

5. Procédé selon l'une quelconque des revendications précédentes, **caractérisé en ce que** la température réactionnelle dans le lit fixe au repos est réglée dans la plage de 50 à 70 °C.

6. Procédé selon l'une quelconque des revendications précédentes, **caractérisé en ce que** la durée de traitement du lit fixe avec de la lessive alcaline se situe dans la plage de 2 heures à 3 jours, de préférence de 12 à 26 heures.

7. Procédé selon l'une quelconque des revendications précédentes, **caractérisé en ce que** la lessive alcaline est pompée en circuit fermé à travers le lit fixe et un échangeur de chaleur est intégré dans le circuit de la lessive alcaline pour le chauffage et le refroidissement du lit fixe.

8. Procédé selon l'une quelconque des revendications précédentes, **caractérisé en ce que**, au terme du traitement avec la lessive alcaline, le lit fixe est purifié par rinçage avec une série d'étapes de rinçage avec de l'eau et/ou avec des acides dilués.

9. Procédé selon la revendication 8, **caractérisé en ce que**, au terme du traitement avec la lessive alcaline, le lit fixe est d'abord rincé avec un ou plusieurs volumes de lit à base d'eau et le lit fixe est purifié par rinçage avec une série d'étapes de rinçage avec de l'eau et/ou avec des acides dilués.

10. Procédé selon la revendication 9, **caractérisé en ce que** la succession des étapes de rinçage est constituée par de une à cinq, de préférence d'une seule étape de rinçage avec respectivement un ou plusieurs volumes de lit à base d'acides dilués, de préférence de 0,05 à 0,5 mole d'acide chlorhydrique ou d'acide sulfurique, suivis de 5 à 100, de préférence de 10 à 30 étapes de rinçage supplémentaires avec respectivement un ou plusieurs volumes de lit à base d'eau pure.

11. Procédé selon les revendications 8 à 10, **caractérisé en ce que**, dans les étapes de rinçage, on maintient un temps de contact entre le milieu de rinçage et les substances solides, de respectivement 10 minutes à 2 heures, de préférence de 15 à 30 minutes, le temps de contact pouvant être réglé en faisant varier le débit de la pompe et en instaurant une phase de repos entre les phases de pompage.

12. Procédé pour la fabrication d'eau très pure comprenant le procédé selon l'une quelconque des revendications 1 à 11.

13. Procédé selon la revendication 12, pour la récupération d'eau très pure pour l'industrie des semi-conducteurs.
